(19) Europäisches Patentamt
European Patent Office
Office européen des brevets

(11) Veröffentlichungsnummer: **0 432 596 A2**

(12) # EUROPÄISCHE PATENTANMELDUNG

(21) Anmeldenummer: **90123034.2**

(22) Anmeldetag: **01.12.90**

(51) Int. Cl.5: **C08K 5/13**, C08L 75/04

(30) Priorität: **14.12.89 DE 3941234**

(43) Veröffentlichungstag der Anmeldung:
**19.06.91 Patentblatt 91/25**

(84) Benannte Vertragsstaaten:
**BE DE FR GB IT NL**

(71) Anmelder: **BAYER AG**

**W-5090 Leverkusen 1 Bayerwerk(DE)**

(72) Erfinder: **Heinz, Hans-Detlef, Dr.**
**Breslauer Strasse 31**
**W-4150 Krefeld 11(DE)**
Erfinder: **Kipphardt, Helmut, Dr.**
**Aalheitengraben 14**
**W-2000 Hamburg 67(DE)**
Erfinder: **Wussow, Hans-Georg, Dr.**
**Bensrodestrasse 51**
**W-4000 Düsseldorf 13(DE)**
Erfinder: **Pielartzik, Harald, Dr.**
**Dörperhofstrasse 39**
**W-4150 Krefeld(DE)**
Erfinder: **Winkler, Jürgen, Dipl.-Ing.**
**Burscheiderstrasse 196**
**W-5090 Leverkusen 3(DE)**

(54) **Thermoplastische Polyurethane mit verbesserter Fliessfähigkeit.**

(57) Die Fließfähigkeit thermoplastischer Polyurethane wird verbessert durch Zusatz spezieller Polyphenole.

EP 0 432 596 A2

Xerox Copy Centre

# THERMOPLASTISCHE POLYURETHANE MIT VERBESSERTER FLIESSFÄHIGKEIT

Die Erfindung betrifft thermoplastische Polyurethan-Formmassen mit verbesserter Fließfähigkeit und die Verwendung dieser Formmassen zur Herstellung von Formkörpern, Folien, Fasern und anderen Gegenständen.

Thermoplastische Polyurethanelastomere (TPU) sind seit langem bekannte Werkstoffe, welche durch einen blockartigen Aufbau aus Hart(Urethanblöcke)-Segmenten und Weich(Polyether-, Polyester-, Poly-(ether)carbonatblöcke)-Segmenten gekennzeichnet sind. Ihr attraktives Eigenschaftsprofil hat ihnen ein breites Einsatzfeld eröffnet.

Je nach z.B. Zusammensetzung, Härte, Formteil und Füllgrad kann aber ihre Fließfähigkeit zu gering sein. Dies kann u.U. durch Temperaturerhöhung bei der Verarbeitung teilweise kompensiert werden. Da jedoch die Verarbeitungstemperatur der TPU häufig schon in einem kritischen Bereich angesiedelt ist, in dem die Urethangruppe thermischzurückspalten kann, ist diese Maßnahme i.a. nicht empfehlenswert.

Gleitmittel für TPU sind bekannt (siehe z.B. DE-A-3 733 752 und DE-A-2 901 774), jedoch ist ihre Wirkung häufig nur unzureichend.

Der Erfindung lag die Aufgabe zugrunde, thermoplastische Polyurethane mit verbessertem Fließverhalten zur Verfügung zu stellen.

Gegenstand der Erfindung sind daher thermoplastische Polyurethanformmassen mit verbessertem Fließverhalten, enthaltend

1. 85 bis 99,5 Gew.-% thermoplastische Polyurethane (TPU) mit einem Molverhältnis von Kettenverlängerern zu Weichsegment von mindestens 1,5 : 1,
2. 0,5 bis 15 Gew.-% Polyphenole der allgemeinen Formel (I),

wobei die Summe aus 1 und 2 100 % ergibt,

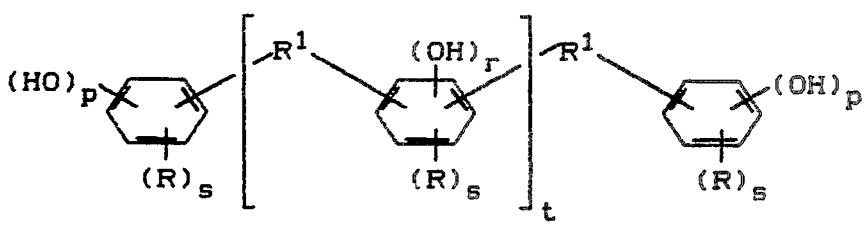

(I)

wobei bedeuten:

R unabhängig voneinander Wasserstoff (H), $C_1$-$C_{20}$-(Ar)Alkyl(oxy), $C_6$-$C_{18}$-(Alk)Aryl(oxy), bevorzugt H und/oder $C_1$-$C_5$-Alkyl und/oder Phenyl,

$R^1$ unabhängig voneinander eine chemische Bindung, einen $C_1$-$C_{20}$-Alkylen- oder (gegebenenfalls cyclischen) Alkyliden-Rest, eine Ester-, eine Amidgruppe, -O-, -SO-, $-SO_2$, -S-, -CO-,

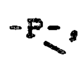 , 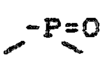

oder auch eine Anellierung zweier oder mehrerer Ringe, bevorzugt $C_1$-$C_{10}$-Alkylen oder (Cyclo)Alkyliden, $-SO_2$-, -S- oder eine chemische Bindung,

p 1 oder 2, bevorzugt 1,

r für die Zahlen 0, 1 oder 2, bevorzugt 1,

s für die Zahlen 0, 1 oder 2, bevorzugt 0 oder 1,

t Zahlen von 0 bis 15 (Mittelwert), bevorzugt 0 bis 8,

mit der Maßgabe, daß kein zu einer phenolischen OH-Gruppe ortho-ständiger Rest R eine tertiäre Alkylgruppe sein soll,

sowie gegebenenfalls

3) bis 200 Gew.-%, bevorzugt 0,01 bis 100 Gew.-%, bezogen auf 1) und 2), üblicher Zusatzstoffe.

Thermoplastische Polyurethane 1) sind bekannt (siehe z.B. J.H. Saunders, K.C. Frisch; Polyurethanes Part I, High Polymer Series XVI, Interscience Publishers, New York, 1962).

Geeignete Isocyanate zu ihrer Herstellung sind beispielsweise (cyclo)aliphatische Diisocyanate wie Hexamethylendiisocyanat, Isophorondiisocyanat, 1,4-Cyclohexandiisocyanat, 4,4'-Dicyclohexylmethandiisocyanat und 1-Methyl-2,4- bzw. -2,6-cyclohexandiisocyanat (bzw. Gemische dieser beiden) sowie aromatische Diisocyanate wie 4,4'-Diphenylmethandiisocyanat (bzw. Isomerengemische verschiedener Diphenylmethandiisocyanate), Toluylen-2,4-bzw. -2,6-diisocyanat (bzw. Gemische dieser beiden), 1,5-Naphthylendiisocyanat und 1,4-Phenylendiisocyanat.

Bevorzugt sind 4,4'-Diphenylmethandiisocyanat (bzw. Gemische mit den 2,4'-Isomeren), Isophorondiisocyanat, Hexamethylendiisocyanat, 2,4- bzw. 2,6-Toluylendiisocyanat (bzw. Gemische dieser), 1,5-Naphthylendiisocyanat und 4,4'-Dicyclohexylmethandiisocyanat. Besonders bevorzugt ist Diphenylmethandiisocyanat mit einem Gehalt des 4,4'-Isomeren von mindestens 95 %.

Als Kettenverlängerer sind (gegebenenfalls im Gemisch) beispielsweise geeignet: Aliphatische Diole wie beispielsweise 1,4-Butandiol, 1,6-Hexandiol, 1,2-Ethylenglykol u.a.m.. Diethylenglykol, Triethylenglykol sowie u.U. auch Diamine wie Ethylendiamin, Hexamethylendiamin, Diaminodiphenylmethane, Toluylendiamine u.a.m.. Diamine als alleinige Kettenverlängerer sind im allgemeinen nicht geeignet, da die resultierenden Polyharnstoffe üblicherweise nicht thermoplastisch verarbeitbar sind.

Bevorzugte Kettenverlängerer sind Alkandiole mit 2 bis 6 C-Atomen, insbesondere Butandiol-1,4.

Die TPU 1) sollen, wenn überhaupt, nur so viele Harnstoffgruppen enthalten, daß die thermoplastische Verarbeitung möglich ist. Bevorzugt enthalten sie weniger als 20 Mol-% Harnstoffgruppen (bezogen auf Urethangruppen); besonders bevorzugt enthalten die TPU 1) keine Harnstoffgruppen.

Als Weichsegmente sind die bekannten Polyester, Poly(ether)carbonate und Polyether geeignet.

Bevorzugte Weichsegmente der TPU sind hydroxylgruppenhaltige höhermolekulare Verbindungen, z.B. Polyesterdiole aus geradkettigen oder verzweigten aliphatischen und/oder cycloaliphatischen Diolen und aliphatischen Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure sowie deren Hydrierungsprodukte enthalten. Ferner sind geeignet Hydroxypoly(ether)carbonate, Hydroxypolycaprolactone oder auch Hydroxypolyetherdiole auf Basis Ethylenoxid, Propylenoxid, Tetrahydrofuran oder Mischpolyether aus Propylenoxid und/oder Ethylenoxid und/oder Tetrahydrofuran.

Auch mit Vinylmonomeren, z.B. Styrol und Acrylnitril, gepfropfte Weichsegmente, z.B. Polyetherpolyole, sind geeignet.

Die Weichsegmente haben üblicherweise Molekulargewichte ($\overline{Mn}$) im Bereich von einige Hundert (z.B. 200-300) bis etwa 6000, bevorzugt 500 bis 3500. Sie können gegebenenfalls auch Aminendgruppen tragen.

Es können die dem Fachmann bekannten monofunktionellen Verbindungen in untergeordneten Anteilen, z.B. von 0,01 bis 3 Gew.-%, bezogen auf PU-Feststoff, als sog. Kettenabbrecher mitverwendet werden. Beispiele sind Monoalkohole wie Butanol, 2-Ethylenhexanol, Isobutylalkohol, Octanol-1, Stearylalkohol oder Monoamine wie Anilin, Dibutylamin, N-Methylstearylamin oder Piperidin.

Katalysatoren und Verfahren zur Herstellung der TPU 1), z.B. das Bandverfahren und das Extruderverfahren, sind bekannt.

Bevorzugte TPU 1) sind aus 4,4'-Diphenylmethandiisocyanat (Gehalt ≥95 %), 1,4-Butandiol und Polyester- bzw. ããã Poly(ether)carbonat-Weichsegmenten (bzw. Weichsegmentmischungen) aufgebaut. Sie werden besonders bevorzugt nach dem Extruder-/Reaktionsschneckenverfahren hergestellt.

Die phenolischen Verbindungen 2) der Formel (I) sind prinzipiell bekannt oder können nach prinzipiell bekannten Verfahren hergestellt werden.

Beispiele für Verbindungen der Formel (I) sind Alkylidenbisphenole wie 2,2-(Bis-4-hydroxyphenyl)-propan, Bis-(4-hydroxyphenyl)-methan, 1,1-(Bis-4-hydroxyphenyl)-cyclohexan, 1,1-(Bis-4-hydroxyphenyl)-ethan, 1,2-Bis-(4-hydroxyphenyl)-ethan, 2,2-(Bis-4-hydroxy-3,5-dimethyphenyl)-propan, 1,1-(Bis-4-hydroxyphenyl)-3,3,5-trimethylcyclohexan, Phenol- bzw. Alkylphenol-Formaldehyd-Kondensate (Novolake) mit im Mittel bevorzugt 3 bis 10 Ringen pro Molekül, 4,4'-Dihydroxydiphenylsulfon.

Bevorzugte Phenole 2) sind 2,2-Bis-(4-hydroxyphenyl)-propan, Bis-(4-hydroxyphenyl)methan, 1,1-Bis-(4-hydroxyphenyl)-3,3,5-trimethylcyclohexan, 4,4'-Dihydroxydiphenylsulfon und Novolake der Formel (II)

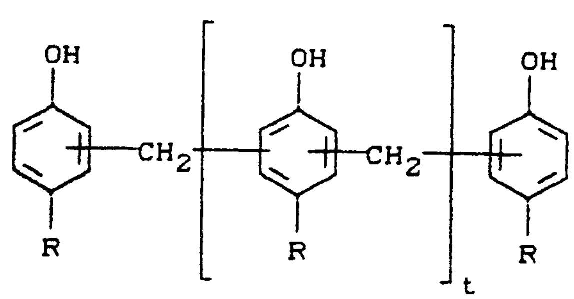

(II),

wobei

R Wasserstoff und/oder einen $C_{1-5}$-Alkylrest und/oder einen Phenylrest, bevorzugt Wasserstoff und

t eine Zahl (Mittelwert) von 1 bis 8 bedeuten,

so daß das Molekulargewicht ($\overline{M}n$) der Novolake zwischen ungefähr 300 und ungefähr 1500 liegt. Sie können auch verzweigt sein, d.h., mehr als zwei $-CH_2$-Gruppen pro Kern tragen.

Die Phenole 2) können einzeln oder in einem beliebigen Gemisch (auch Isomerengemische) eingesetzt werden. Sie sind bekannte Verbindungen oder können nach prinzipiell bekannten Verfahren hergestellt werden.

Die Phenole 2) werden bevorzugt in Mengen von 2,5 bis 12 und besonders bevorzugt 3 bis 10 Gew.-% (bezogen auf Mischung) eingesetzt.

Als Zusatzstoffe 3) kommen insbesondere Antistatika, Stabilisatoren, Flammschutzmittel, Füllstoffe, Glasfasern und andere Verstärkungsmittel, Farbstoffe, Pigmente, polymere Legierungspartner und Nukleiermittel in Frage. Auch Trennmittel, sowohl äußerliche wie auch eingebaute Trennmittel, können anwesend sein.

Die Herstellung der erfindungsgemäßen Formmassen erfolgt vorzugsweise durch Mischen der Komponenten in der Schmelze, gegebenenfalls nach Vorvermischung bzw. in mehreren Schritten. Auch eine Einarbeitung im Anschluß an die Herstellungsreaktion, z.B. im Teil einer Reaktionsschnecke, sollte möglich sein. Auch eine Zugabe erst unmittelbar vor der Verarbeitung ist möglich.

Die Verarbeitung geschieht über die Schmelze, wobei die Phenole 2) die Schmelzviskosität absenken.

Polyurethane, die eine synergistisch wirkende Stabilisatorkombination aus sterisch gehinderten Phenolen, Alkylidenbisphenolen und gegebenenfalls gewissen Stickstoffverbindungen enthalten, sind in den japanischen Patentanmeldungen 43754/1973 und 43755/1973 beschrieben. Es wird offenbart, daß die Alkylidenbisphenole für sich keinen signifikanten stabilisierenden Effekt ausüben. Die genannten Anmeldungen enthalten keinerlei Hinweis auf eine Verarbeitung über die Schmelze bzw. eine fließverbessernde Wirkung der Polyphenole. Dies ist umso verständlicher, als die in den Beispielen eingesetzten Polymere im Hartsegment ausschließlich Harnstoffgruppen enthalten. Sie sind daher Polyharnstoffe, die bekanntlich sich praktisch nicht über die Schmelze verarbeiten lassen [s. C.R. McMiliu, Elastomerics 1988 (11), 22; S. Gogelewski, Coll. & Polym. Sci. 267, 757 (1989)]. Die erfindungsgemäße Fließverbesserung thermoplastischer Polyurethane durch Zusatz polyphenolischer Verbindungen ist von daher unerwartet und nicht aus dem Stand der Technik ableitbar.

In den deutschen Patentanmeldungen DE-A-3 810 567 und 3 810 568 werden Mischungen aus bestimmten Polyurethanen und Phenolen sowie gegebenenfalls speziellen polymeren Legierungspartnern offenbart. Diese Polyurethane sind mit Werten für das Molverhältnis von Kettenverlängerern zu Weichsegment von maximal 1,1 : 1 sowie ihrer Löslichkeit in organischen Lösungsmitteln wie Aceton und Methylenchlorid typische Klebstoffpolyurethane, wie sie üblicherweise als Lösungen in den genannten Lösungsmitteln u.a. eingesetzt werden. Demgegenüber besitzen die TPU 1) der Erfindung Molverhältnisse von Kettenverlängerer zu Weichsegment von mindestens 1,5 : 1, bevorzugt mindestens1,8 : 1 und besonders bevorzugt mindestens 2,0 : 1 und sind i.a. in den genannten Lösungsmitteln unlöslich bzw. höchstens quellbar.

Auch diese Anmeldungen geben daher keinerlei Hinweis auf die fließverbessernde Wirkung von Polyphenolen in den thermoplastischen Polyurethanen der Erfindung.

Die erfindungsgemäßen Polyurethanelastomeren weisen eine drastisch erhöhte Fließfähigkeit auf. Sie können von daher schonender, gegebenenfalls auch bei niedrigerer Temperatur, und auch zu komplizierteren Formteilen verarbeitet werden. Gegebenenfalls kann auch bei großen Teilen die Zahl der Einspritzöffnungen und dadurch auch die Zahl der Fließnähte verringert werden. Die mechanischen Eigenschaften werden durch die Phenole 2) i.a. nur wenig beeinflußt. Die Zugdehnung kann aber signifikant erhöht sein. Weiterhin kann die UV-Beständigkeit erhöht sein.

Die neuen Formmassen sind daher eine wertvolle Bereicherung des Standes der Technik. Sie eignen sich zur Herstellung nichtklebriger Formkörper. Unter Formkörpern werden insbesondere Folien, Fasern, Spritzgußteile und Verbundwerkstoffe verstanden.

Beispiele

In den folgenden Beispielen bedeuten:

TPU-1: Polyesterurethanelastomer, aufgebaut aus 100 Gew.-Teilen eines Adipinsäure-Butandiol-Polyesters ($\overline{M}n$ = 2.250 $gmol^{-1}$), 10,5 Gew.-Teilen Butandiol-1,4 und 40 Gew.-Teilen 4,4'-Diphenylmethandiisocyanat.

TPU-2: Polyesterurethanelastomer, aufgebaut aus 85 Gew.-Teilen Adipinsäure-Butandiol-Polyester

($\overline{M}n$ = 2.250 $gmol^{-1}$), 15 Gew.-Teilen Adipinsäure-Butandiol-Ethylenglykol-Polyester ($\overline{M}n$ = 2.000 $gmol^{-1}$), 31,5 Gew.-Teilen Butandiol-1,4, 96 Gew.-Teilen 4,4'-Diphenylmethandiisocyanat und 0,76 Gew.-Teilen 1-Octanol.

Phenol 1: 2,2-(Bis-4-hydroxyphenyl)-propan

Phenol 2: Phenol-Formaldehyd-Novolak (Phenol:$CH_2O$ ≃ 1:0,78)

Beispiele 1 und 2

TPU-2 wurde mit je 10 Gew.-% Phenol 1 bzw. Phenol 2 trocken vermischt und bei 220° C und einem Durchsatz von 30 kg $h^{-1}$ über einen ZSK 53-Doppelwellenextruder extrudiert.

Arbeitsaufnahmewerte des Extruders sind in Tabelle 1 enthalten.

Vergleichsbeispiel 1

In derselben Weise wurde das unmodifizierte Polymer extrudiert. Die Daten sind ebenfalls in Tabelle 1 enthalten:

Tabelle 1

| Bsp. | Phenol | Menge (%) | A (A) 1) |
|---|---|---|---|
| 1 | 1 | 10 | 12 |
| 2 | 2 | 10 | 15 |
| Vergleich 1 | - | - | 37 |

1) A bedeutet die Arbeitsaufnahme des Extruders in Ampere; sie ist ein Maß für die Fließfähigkeit. Je geringer die Arbeitsaufnahme ist, desto besser die Fließfähigkeit.

Beispiele 3 und 4

TPU-1 wurde mit 5 und 10 Gew.-% (bezogen auf Mischung) Phenol 1 über einen ZSK-53-Doppelwellenextruder compoundiert und zu Prüfkörpern verarbeitet. Mechanische Eigenschaften sowie die MVI-Werte sind in Tabelle 2 zusammengestellt.

Vergleichsbeispiel 2

In derselben Weise wurde das reine TPU geprüft (Tabelle 2).

| Beispiel | % Phenol 1 | $\delta_z$ 1) [MPa] | $\varepsilon_z$ 2) [%] | $\delta_w$ 3) [kN/m] | Shorehärte A | Shorehärte D | MVI 4) |
|---|---|---|---|---|---|---|---|
| 3 | 5 | 29,9 | 654 | 76,8 | 84 | 32 | 136,0 |
| 4 | 10 | 25,3 | 707 | 49,2 | 88 | 31 | 209,7 |
| Vergleich 2 | - | 37,8 | 582 | 70,3 | 85 | 34 | 25,5 |

1) Zugfestigkeit; DIN 53 504
2) Zugdehnung; DIN 53 504
3) Weiterreißfestigkeit; DIN 53 515
4) Melt Viscosity Index (g/10 Min., 190° C, 10 kg)

Beispiele 5 und 6 und Vergleichsbeispiel 3

Es wurden die Compounds der Beispiele 3 und 4 und Vergleich 2 einer Verarbeitung auf einer Folienblaslage (50 µ Folienstärke) unterworfen mit dem Ziel, das Ausmaß der durch die Fließfähigkeitserhöhung möglichen Verarbeitungstemperaturabsenkung festzustellen.

Unter vergleichbaren Bedingungen konnten die erfindungsgemäß modifizierten Proben bei 184° C (Bsp. 3) bzw. 180° C (Bsp. 4) verarbeitet werden, während für Vergleich 2 eine Temperatur von 200° C benötigt wurde.

Diese deutliche Absenkung der Verarbeitungstemperatur ist ein besonders wertvoller Aspekt der Erfindung.

## Ansprüche

1. Thermoplastische Formmassen enthaltend
   1) 85 bis 99,5 Gew.-% thermoplastische Polyurethane mit einem Molverhältnis von Kettenverlängerer zu Weichsegment von mindestens 1,5:1,
   2) 0,5 bis 15 Gew.-% Polyphenole der allgemeinen Formel (I),

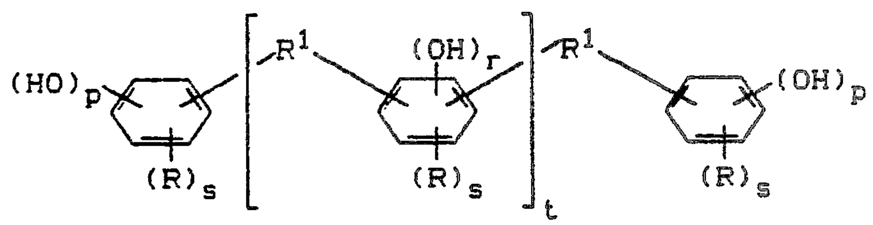

(I),

   wobei bedeuten:
   R unabhängig voneinander Wasserstoff (H), $C_1$-$C_{20}$-(Ar)Alkyl(oxy) und/oder $C_6$-$C_{13}$-(Alk)Aryl-(oxy),
   $R^1$ unabhängig voneinander eine chemische Bindung, einen $C_1$-$C_{20}$-Alkylen- oder (gegebenenfalls cyclischen) Alkyliden-Rest, eine Ester-, eine Amidgruppe, -O-, -SO-, $-SO_2-$, -S-, -CO-,

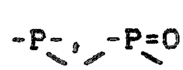

oder auch eine Anellierung zweier oder mehrerer Ringe, bevorzugt $C_1$-$C_{12}$-Alkylen oder (Cyclo)Alkyliden, -$SO_2$-, -S- oder eine chemische Bindung,

p 1 oder 2,
r 0, 1 oder 2,
s 0, 1 oder 2,
t 0 bis 15 (Mittelwert),

mit der Maßgabe, daß kein zu einer phenolischen OH-Gruppe ortho-ständiger Rest R eine tertiäre Alkylgruppe sein soll,
sowie gegebenenfalls
3) bis 200 Gew.-% üblicher Zusatzstoffe.

**2.** Thermoplastische Formmassen nach Anspruch 1, dadurch gekennzeichnet, daß als Phenole 2) 2,2-Bis-(4-hydroxyphenyl)propan, Bis-(4-hydroxyphenyl)methan, 4,4'-Dihydroxydiphenylsulfon, 1,1-Bis-(4-hydroxyphenyl)-3,3,5-trimethylcyclohexan sowie Novolake der Formel (II)

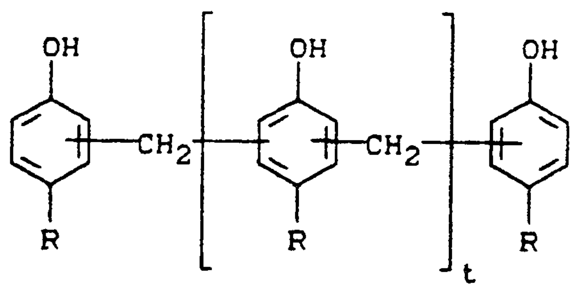

(II),

wobei
R Wasserstoff und/oder $C_{1-5}$-Alkyl und/oder Phenyl und
t eine Zahl (Mittelwert) von 1 bis 8 bedeuten,
eingesetzt werden.

**3.** Thermoplastische Formmassen nach wenigstens einem der vorhergehenden Ansprüche, enthaltend 2,5 bis 12 Gew.-% Phenole der Formel (I).

**4.** Thermoplastische Formmassen nach wenigstens einem der vorhergehenden Ansprüche, dadurch gekennzeichnet, daß die Polyurethane 1) aus 4,4'-Diphenylmethandiisocyanat, $C_{2-5}$-Alkylenglykolen und Polyester-und/oder Poly(ether)carbonat-Weichsegmenten aufgebaut sind.

**5.** Thermoplastische Formmassen nach wenigstens einem der vorhergehenden Ansprüche, gekennzeichnet dadurch, daß das Molverhältnis von Kettenverlängerer zu Weichsegment in den Polyurethanen 1) mindestens 1,8 : 1 beträgt.

**6.** Thermoplastische Formmassen nach wenigstens einem der vorhergehenden Ansprüche, dadurch gekennzeichnet, daß die Polyurethane 1) in der Schmelze nach dem Extruder/Reaktionsschneckenverfahren hergestellt werden.

**7.** Thermoplastische Formmassen nach wenigstens einem der vorhergehenden Ansprüche, dadurch gekennzeichnet, daß als Zusatzstoffe 3) Füll-/Verstärkungsstoffe, Entformungsmittel, polymere Legierungspartner oder Stabilisatoren enthalten sind.

**8.** Verfahren zur Herstellung der Formmassen gemäß wenigstens einem der vorhergehenden Ansprüche, dadurch gekennzeichnet, daß die Polyurethane 1), die Phenole 2) sowie gegebenenfalls weitere Zusatzstoffe 3) in der Schmelze miteinander vermischt werden.

**9.** Verfahren zur Herstellung von Formkörpern aus Formmassen, dadurch gekennzeichnet, daß Formmassen nach wenigstens einem der vorhergehenden Ansprüche verwendet werden.